# EUROPÄISCHE PATENTSCHRIFT

(11) **EP 1 664 593 B1**
(45) Veröffentlichungstag und Bekanntmachung des Hinweises auf die Patenterteilung: **31.08.2011**
(21) Anmeldenummer: 04786967.2
(22) Anmeldetag: 20.09.2004
(51) Int. Cl.: F16H 47/06

(54) **ÜBERBRÜCKUNGSSCHALTUNG FÜR HYDRODYNAMISCHE KOMPONENTEN**
LOCKUP CLUTCH FOR HYDRODYNAMIC COMPONENTS
EMBRAYAGE DE PONTAGE POUR COMPOSANTS HYDRODYNAMIQUES

(30) Priorität: 19.09.2003 DE 10343971; 19.09.2003 DE 10343906; 07.10.2003 DE 10347037
(43) Veröffentlichungstag der Anmeldung: 07.06.2006
(73) Patentinhaber: Voith Turbo GmbH & Co. KG, 89522 Heidenheim (DE)
(72) Erfinder: KLEMENT, Werner, 89520 Heidenheim (DE); ADAMS, Werner, 74564 Crailsheim (DE); BROCKMANN, Rolf, 89522 Heidenheim (DE); KOCH, Werner, 73326 Deggingen (DE); BECKE, Martin, 89075 Ulm (DE)
(74) Vertreter: Dr. Weitzel & Partner
(86) Internationale Anmeldenummer: PCT/EP2004/010521
(87) Internationale Veröffentlichungsnummer: WO 2005/028923

(56) Entgegenhaltungen:
- FR-A- 1 000 870
- GB-A- 721 365
- US-A- 2 344 656
- US-A- 3 138 964

## Beschreibung

Die Erfindung betrifft eine Überbrückungsschaltung für hydrodynamische Komponenten, insbesondere zur Kopplung mit nachgeordneten Gangstufen eines Getriebes, im einzelnen mit den Merkmalen aus dem Oberbegriff des Anspruches 1. Die FR-A-1000870 wird als nächst liegender Stand der Technik angesehen.

Hydrodynamische Komponenten als Anfahrkomponenten sind in einer Vielzahl von Ausführungen für unterschiedlichste Getriebetypen bekannt. Allen gemeinsam ist jedoch, dass diese in der Regel nur über einen Teil des gesamten Betriebsbereiches des Getriebes wirksam sind, das heißt Leistung übertragen. Dabei werden gerade während des Anfahrvorganges die vorteilhaften Eigenschaften der hydrodynamischen Komponenten, welche in Form von hydrodynamischen Kupplungen oder hydrodynamischen Drehzahl-/Drehmomentwandlern ausgeführt sein können, ausgenutzt. Überwiegen die nachteiligen Eigenschaften gegenüber der mechanischen Leistungsübertragung, werden die hydrodynamischen Komponenten überbrückt, d. h., der Leistungsfluss erfolgt nicht mehr über die hydrodynamische Komponente. Die Überbrückung erfolgt dabei durch Kopplung des Sekundärrades an das Primärrad, vorzugsweise drehfeste starre Kopplung, wobei jedoch auch schlupfbehaftete Ausführungen denkbar sind. Zur Überbrückung werden dabei in der Regel sogenannte Überbrückungskupplungen verwendet, die vorzugsweise in Lamellenbauart ausgeführt sind. Die hydrodynamische Komponente ist nicht mehr an der Leistungsübertragung beteiligt, wird jedoch aufgrund der starren Kopplung mitgeschleppt. Diese kann bei Herausnahme aus dem Leistungsfluss entweder befüllt bleiben oder aber wird vorzugsweise entleert. Dabei ist es in der Regel für den Hersteller der hydrodynamischen Komponente erforderlich, den Bauraum für die Überbrückungskupplung mit zu berücksichtigen. Ferner ist der Hersteller der Überbrückungskupplung an die vorliegenden Gegebenheiten der hydrodynamischen Komponente gebunden. Dabei wird das gesamte Element als sogenannte Anfahreinheit komplett vormontiert geliefert. Da es sich bei der Überbrückungskupplung in der Regel um eine reibschlüssige Kupplung handelt, sind Wirkungsgradverluste zu verzeichnen. Ferner handelt es sich um ein verschleißbehaftetes Bauteil, welches nach einer bestimmten Betriebszeit ausgewechselt werden sowie hinsichtlich der konkreten Betriebsweise dimensioniert sein muss, um Überlastungen regelmäßig zu vermeiden.

Getriebebaueinheiten, insbesondere Automatgetriebe mit einem Anfahrelement sowie einer diesem zugeordnete Überbrückungskupplung und eine dem Anfahrelement und der Überbrückungskupplung nachgeordnete Drehzahl-/Drehmomentwandlungseinheit, die durch wenigstens eine Gangstufe charakterisiert ist, sind in einer Vielzahl von Ausführungen vorbekannt.. Diesbezüglich wird beispielsweise auf nachfolgende Druckschriften verwiesen.
FR 2 719 355
DE 949 990
DE 972 489
US 3,442,155
DE 960 529

Aus der Druckschrift DE 949 990 ist ein Getriebe für Kraftfahrzeuge mit einem Strömungsgetriebe vorbekannt, das mit einem mehrgängigen Stirnräderwechselgetriebe mit einem Hauptwellenzug und einem dazu parallelen Nebenwellenzug vereinigt ist, wobei das Primärrad des Strömungsgetriebes mit dem Antriebsritzel eines dem Wechselgetriebe vorgeschalteten Zahnrädervorgeleges und das Turbinenrad mit dem Antriebsritzel eines weiteren dem Wechselgetriebe vorgeschalteten Zahnrädervorgeleges verbunden ist, wobei die Übersetzung in dem durch das Pumpenrad antreibbaren Vorgelege von der Übersetzung in dem durch das Turbinenrad antreibbaren Vorgelege unterschiedlich ist. Das Turbinenrad ist dabei über einen Freilauf mit dem mit diesem gekoppelten Vorgelege verbunden. Die Leistungsübertragung von den einzelnen Drehzahl-/Drehmomentwandlungseinrichtungen in Form von Vorgelegen erfolgt dann über ein weiteres Vorgelege auf den Getriebeausgang, welcher koaxial zur Getriebeeingangswelle angeordnet ist. Der hydrodynamische Drehzahl-/Drehmomentwandler befindet sich dabei immer im Kraftfluss, was sich jedoch gerade im Hinblick auf den Hauptarbeitsbereich einer derartigen Getriebebaueinheit als negativ hinsichtlich des Wirkungsgrades auswirkt und ferner ist keine Schubmomentübertragungsmöglichkeit aufgrund des zwischengeschalteten Freilaufes zur Antriebsmaschine gegeben. Die Leistungsübertragung erfolgt über entsprechende Vorgelege, wobei je nach gewünschter Abstufung und gewünschter zu übertragender Leistung entsprechende Gangstufen vorzusehen sind. Ferner ist bei einem derartigen Getriebe die mögliche Gangzahl vorgegeben, so dass jegliche Erweiterung zur Aufnahme zusätzlicher Gangstufen in das Wechselgetriebe führt. Dies hat dann zur Folge, dass die axiale Baulänge sich erheblich vergrößert. Andere Modifikationen, die eine Baugrößenveränderung in radialer Richtung zur Folge haben, wären ebenfalls denkbar, sind jedoch sehr aufwendig.

Der Erfindung liegt daher die Aufgabe zugrunde, eine Möglichkeit der Überbrückung einer hydrodynamischen Komponente, insbesondere einer hydrodynamischen Kupplung, zu schaffen, die zum einen nicht an die baulichen Gegebenheiten der hydrodynamischen Komponente gebunden ist, sowie ferner in Kombination mit mindestens einer Drehzahl-/Drehmomentwandlungseinrichtung, insbesondere einzelnen Gangstufen, vorteilhafte Eigenschaften aufweist. Dabei ist zu gewährleisten, daß die Möglichkeit in Kombination mit nachgeordneten Schaltstufen besteht, bei Bedarf alle Gänge jeweils entweder über das Anfahrelement oder aber unter Umgehung des Anfahrelementes zu fahren.

Die erfindungsgemäße Lösung ist durch die Merkmale des Anspruchs 1 charakterisiert. Vorteilhafte Ausgestaltungen sind in den Unteransprüchen beschrieben.

Erfindungsgemäß ist der hydrodynamischen Komponente, umfassend mindestens ein mit einem Antrieb koppelbares, vorzugsweise gekoppeltes Primärrad und ein mit mindestens einer Drehzahl-/Drehmomentwandlungseinrichtung verbindbares Sekundärrad eine Überbrückungsschaltung zugeordnet, welche zwei Eingänge und wenigstens einen Ausgang umfasst. Über die Kopplung zwischen dem einzelnen Eingang und dem Ausgang werden dabei zwei Leistungszweige realisiert. Ein erster Eingang der Überbrückungsschaltung ist dazu mit dem Sekundärrad drehfest verbunden, während der zweite Eingang drehfest mit dem Primärrad gekoppelt ist. Der erste Leistungszweig ist dabei durch die Verbindung zwischen dem ersten Eingang und dem Ausgang charakterisiert und dient der Leistungsübertragung über die hydrodynamische Komponente. Der zweite Leistungszweig ist durch die Kopplung zwischen dem Primärrad und dem Ausgang der Überbrückungsschaltung charakterisiert, wobei in diesem Fall die hydrodynamische Komponente im Leistungsfluss umgangen wird. Zur wahlweisen Kopplung des ersten oder zweiten Leistungszweiges an den Ausgang bzw. mit dem mit diesen koppelbaren Drehzahl-/Drehmomentwandlungseinrichtungen ist mindestens eine schaltbare Kupplungseinrichtung vorgesehen. Diese umfasst entweder eine beiden Leistungszweigen gemeinsam zugeordnete Kupplung, die durch wenigstens zwei Schaltstellungen charakterisiert ist, wobei in der ersten Schaltstellung der erste Eingang mit dem Ausgang wenigstens mittelbar drehfest verbunden wird, während in der zweiten Schaltstellung der zweite Eingang mit dem Ausgang gekoppelt ist, wobei in dieser Schaltstellung die hydrodynamische Komponente frei von einer drehfesten Kopplung zwischen Primärrad und Sekundärrad ist. Dies bedeutet im Einzelnen, dass die hydrodynamische Komponente aus dem Leistungsfluss herausgenommen wird und zumindest das Sekundärrad bei mechanischer Leistungsübertragung nicht mehr mitrotieren muss, d. h. nicht mehr zwangsgekoppelt ist. Denkbar ist auch die Zuordnung einer schaltbaren Kupplung zu jedem Leistungszweig, d.h. die schaltbare Kupplungseinrichtung umfasst zwei Kupplungen. Die Überbrückung der hydrodynamischen Komponente selbst erfolgt somit nicht nur unmittelbar, sondern kann in beliebiger Stelle dieser nachgeordnet im Kraftfluss vorgenommen werden. Damit wird es möglich, die Überbrückung auch in ein Getriebe zu verlagern, wenn die hydrodynamische Komponente als separate Baueinheit ausgeführt ist.

Zur Realisierung dieser Funktionsweise umfasst die Überbrückungsschaltung ein erstes drehfest mit dem Sekundärrad verbundenes Vorgelege und ein zweites drehfest mit dem Primärrad verbundenes Vorgelege. Die Vorgelege können auch als Drehzahl-/Drehmomentwandlungseinrichtungen bezeichnet werden und dienen der Verbindung exzentrisch zueinander angeordneter Wellen oder anderen rotierenden Elementen. Beide Vorgelege sind wahlweise über die schaltbare Kupplungseinrichtung mit dem Ausgang der Überbrückungsschaltung verbindbar, umfassend entweder eine beiden Vorgelegen gemeinsam zugeordnete schaltbare Kupplung oder zwei, d.h. jedem Vorgelege separat zugeordnete und separat oder gemeinsam ansteuerbare Kupplungen. Bei koaxialer Anordnung von Eingang und Ausgang der Überbrückungsschaltung oder exzentrischer Anordnung zum Ausgang der beiden Vorgelege erfolgt die Verbindung über ein weiteres drittes Vorgelege. An den Ausgang sind dann verschiedene Gangstufen realisierende Drehzahl- und Drehmomentwandlungseinrichtungen koppelbar, wobei die Vorgelegeübersetzung des dritten Vorgeleges ebenfalls auch als Gangstufenübersetzung genutzt werden kann. Vorzugsweise ist in diesem Fall das dritte Vorgelege vom Ausgang über eine zweite Kupplungseinrichtung, umfassend eine Kupplung entkoppelbar. Wird der Ausgang der Überbrückungsschaltung jedoch direkt von der mit den Drehzahl-/Drehmomentwandlungseinrichtungen der Überbrückungsschaltung gekoppelten Vorgelegewelle gebildet, sind über diesen bzw. die mit dieser drehfest verbindbaren weiteren dritten Vorgelege unterschiedliche Gangstufen realisierbar. Die schaltbare Kupplungseinrichtung ist dazu zwischen dem ersten und dem zweiten Vorgelege entweder koaxial oder parallel beziehungsweise exzentrisch zu einer durch den Eingang der Kombination aus hydrodynamischer Komponente und Überbrückungsschaltung gelegten theoretischen Achse angeordnet, wobei der Eingang der Kombination vom Primärrad bzw. wenigstens mittelbar vom zweiten Eingang der Überbrückungsschaltung gebildet wird. Die schaltbare Kupplung dient der Kopplung einer parallel zum Eingang angeordneten Vorgelegewelle mit den beiden Vorgelegen - erstes Vorgelege und zweites Vorgelege - und über die Vorgelegewelle mit den nachgeordneten Schaltstufen, wobei der Ausgang der Überbrückungsschaltung entweder direkt von der Vorgelegewelle gebildet wird und die nachfolgenden Gangstufen dann vorzugsweise von mit dem eigentlichen Getriebeausgang koppelbaren weiteren dritten Vorgelegen mit unterschiedlicher Übersetzung gebildet werden oder aber die Verbindung zu den nachfolgenden Gangstufen immer noch über eine weitere Übersetzung in Form eines nicht entkoppelbaren dritten Vorgeleges realisiert wird, welches mit dem Ausgang drehfest verbunden ist. Im ersten Fall sind quasi eine Vielzahl von wahlweise mit der Vorgelegewelle koppelbaren dritten Vorgelegen vorgesehen, die unterschiedliche Übersetzungen realisieren. Im anderen Fall dient das dritte Vorgelege der Rückführung auf eine Eingangswelle einer beliebig Gangstufen bildenden Getriebeeinheit, beispielsweise in Planetenbauweise. Mit der Überbrückungsschaltung wird bei gewünschter rein mechanischer Leistungsübertragung eine Umgehung der hydrodynamischen Komponente ermöglicht, die frei von einer drehfesten Kopplung zwischen dem Primärrad und dem Sekundärrad ist. Das Sekundärrad kann in diesem Fall frei mitlaufen und ist frei von einer Abstützung gegenüber einem rotierenden oder ortsfesten Element. Dies kann dabei bei befüllter hydrodynamischer Komponente erfolgen. Die Überbrückung, das heißt die Umgehung des hydrodynamischen Leistungszweiges, erfolgt dabei durch Änderung bzw. Wechsel des Leistungsweges bzw. der beiden Leistungswege über das erste oder zweite Vorgelege.

Das erste und das zweite Vorgelege sind koaxial und parallel zueinander angeordnet. In Abhängigkeit der Anordnung von Primärrad und Sekundärrad zwischen dem mit dem Eingang der aus Überbrückungsschaltung und hydrodynamischer Komponente bestehenden Baugruppe und dem Ausgang dieser in axialer Richtung betrachtet, erfolgt dabei die Anordnung des ersten und des zweiten Vorgeleges in axialer Richtung nebeneinander. Der Eingang der Baugruppe wird dabei vom Primärrad bzw. einem mit diesem drehfest verbundenen Element bzw. dem ersten Eingang der Überbrückungsschaltung gebildet. Der Ausgang der Baugruppe aus hydrodynamischer Komponente und Überbrückungsschaltung wird vom Ausgang der Überbrückungsschaltung gebildet. Dieser dient der Kopplung mit nachgeordneten Drehzahl-/Drehmomentwandlungseinrichtungen. Bei Anordnung des Primärrades in axialer Richtung vor dem Sekundärrad erfolgt die Anordnung des ersten Vorgeleges vor dem zweiten Vorgelege. Andere Möglichkeiten sind denkbar. Bezüglich der Ausgestaltung der Vorgelege bestehen eine Vielzahl von Möglichkeiten. Vorzugsweise sind diese als einfache Stirnradsätze ausgeführt. Diese umfassen dabei jeweils zwei miteinander kämmende Stirnräder, wobei jeweils ein erstes Stirnrad drehfest mit dem Sekundärrad beziehungsweise für das zweite Vorgelege drehfest mit dem Primärrad verbunden ist, während die jeweils mit diesen kämmenden zweiten Stirnräder drehfest über die erste schaltbare Kupplung mit der Vorgelegewelle koppelbar sind. Dies gilt auch für das mit der Vorgelegewelle drehfest koppelbare dritte Vorgelege, welches drehfest mit dem Ausgang A verbindbar oder verbunden ist.

Bei Ausführung der schaltbaren Kupplung als formschlüssige Kupplung ist jedoch zur Realisierung der Überbrückung Drehzahlgleichheit zwischen den beiden Ausgängen von erstem und zweitem Vorgelege erforderlich, um die schaltbare Kupplung oder Kupplungen der ersten Kupplungseinrichtung in die Schaltstellung zu bringen, die eine drehfeste Verbindung der Vorgelege mit der Vorgelegewelle ermöglicht. Dazu wird die Drehzahl der mit dem Eingang der aus hydrodynamischer Komponente und Überbrückungsschaltung koppelbaren Antriebsmaschine in der Regel reduziert, vorzugsweise gesteuert. Gemäß einer besonders vorteilhaften Ausgestaltung kann jedoch auf eine derartige Ansteuerung der Antriebsmaschine verzichtet werden, wenn die Auslegung der beiden Vorgelege, erstes Vorgelege und zweites Vorgelege, derart erfolgt, dass für das zweite Vorgelege, welches drehfest mit dem Primärrad gekoppelt ist, eine Übersetzung gewählt wird, die den Schlupf der hydrodynamischen Kupplung berücksichtigt. Dabei wird ein bestimmter vordefinierter Schlupfwert zugrundegelegt, der durch eine bestimmte vordefinierte zulässige Drehzahldifferenz zwischen Primärrad und Sekundärrad charakterisiert ist. Die Dimensionierung des zweiten Vorgeleges erfolgt derart, dass eine bestimmte Drehzahldifferenz zum Sekundärrad und dem mit diesen gekoppelten ersten Vorgelege ausgeglichen wird, indem bei dieser beide Ausgänge der beiden Vorgelege mit gleicher Drehzahl rotierten und somit die erforderliche Drehzahlgleichheit besteht, um bei synchron schaltbaren Kupplungen den Leistungsflussweg zu wechseln. Aufgrund der sich durch die unterschiedlichen Übersetzungen an den Ausgängen der Vorgelege ergebenden gleichen Drehzahl kann in diesem Zustand problemlos eine Schaltung zwischen dem ersten und zweiten Vorgelege erfolgen. Die Dimensionierung, insbesondere Auslegung der Stirnräder hinsichtlich Zähnezahl, Durchmesser und der den Eingriff bestimmenden Parameter ist somit eine Funktion einer bestimmten vordefinierten Drehzahldifferenz, bei welcher eine Überbrückung erfolgen soll.

Zur Realisierung der Überbrückungsfunktion absolut notwendig ist wenigstens eine den beiden Leistungszweigen zugeordnete schaltbare Kupplungseinrichtung, umfassend entweder eine beiden Vorgelegen (erstem und zweitem) gemeinsam zugeordnete schaltbare Kupplung, die zwischen den beiden Vorgelegen angeordnet ist und wahlweise der drehfesten Kopplung des ersten Vorgeleges mit der Vorgelegewelle oder aber des zweiten Vorgeleges mit der Vorgelegewelle dient oder jedem Vorgelege separat zugeordnete Kupplung. Im einfachsten Fall wird dabei beiden Vorgelegen eine gemeinsam wechselweise nutzbar schaltbare Kupplung zugeordnet. Denkbar ist jedoch auch, jedem der Vorgelege bzw. Leistungszweige eine eigene schaltbare Kupplung zuzuordnen, die einzeln ansteuerbar sind, wobei die Betätigung jedoch aufeinander abgestimmt sein sollte. Die Kupplungen können dabei sowohl koaxial zum Anfahrelement als auch exzentrisch zu diesem angeordnet werden. Die Anordnung kann dabei an beliebiger Stelle im Leistungsweg der einzelnen Leistungszweige erfolgen, d.h. die Anordnung kann koaxial als auch exzentrische zur Vorgelegewelle erfolgen. Dabei besteht theoretische auch die Möglichkeit bei Zuordnung jeweils einer schaltbaren Kupplung zu einem Leistungszweig die Anordnung an unterschiedlichen Positionen in den beiden Leistungszweigen vorzunehmen.

Durch die Vorgelege wird zusätzlich eine Übersetzung zum nachfolgenden Getriebeeingang realisiert. Diese ist abhängig von der Größe der Übersetzung in den Vorgelegen - erstem und zweitem Vorgelege und evt. drittem Vorgelege. Um jedoch auch eine direkte starre Kopplung zwischen dem Eingang, der aus hydrodynamischer Komponente und Überbrückungsschaltung bestehenden Baugruppe und deren Ausgang, der mit dem Eingang nachfolgender Drehzahl-/Drehmomentwandlungseinrichtungen koppelbar ist, zu schaffen, ist des weiteren eine weitere schaltbare Kupplung vorgesehen, die im Fall der Kopplung des Einganges von nachgeordneten Schaltstufen über das dritte Vorgelege das dritte Vorgelege wahlweise mit der Vorgelegewelle verbindet oder nicht, und eine schaltbare Kupplung, die zwischen den beiden mit Primärrad und Sekundärrad gekoppelten Vorgelegen und dem dritten Vorgelege angeordnet ist und diese in einem Funktionszustand miteinander drehfest miteinander verbindet. Diese Kupplung wird hier als dritte Kupplung bezeichnet. Im Fall der Ausbildung der dritten Vorgelege als Gangstufenübersetzung, d.h. Bildung des Ausganges der Überbrückungsschaltung von der Vorgelegewelle wird die Funktion dieser zusätzlichen dritten Kupplung zur Entkoppelung des dritten Vorgeleges bereits jeweils von den ohnehin den einzelnen dritten Vorgelegen zugeordneten Kupplungen übernommen. Die dritte Kupplung ermöglicht eine direkte drehfeste Kopplung zwischen den Eingängen und dem Ausgang der Überbrückungsschaltung, wobei diese koaxial zum Ein- und Ausgang der Baugruppe, zumindest jedoch der hydrodynamischen Komponente erfolgt. Die direkte Kopplung erfolgt dabei vorzugsweise außerhalb der Leistungszweige. Mit dieser Anordnung kann ein Durchtrieb zwischen Eingang und Ausgang der Baugruppe aus hydrodynamischer Komponente und Überbrückungsschaltung realisiert werden, wobei man bei Kopplung mit nachfolgenden Getriebestufen von einem direkten Gang mit Übersetzung 1 : 1 spricht. Der Leistungsfluss erfolgt dabei direkt zwischen Eingang und Ausgang koaxial und nicht über weitere Übertragungselemente. Diese Schaltstellung wird für den Durchtrieb im direkten Gang gewählt, wobei dann die beiden die Verbindungen zwischen den Eingängen der Überbrückungsschaltung mit der Vorgelegewelle und der Vorgelegewelle mit dem Ausgang der Überbrückungsschaltung realisierende Kupplungen, schaltbare Kupplung und zweite schaltbare Kupplung, in diesem Funktionszustand geöffnet sind und somit die Vorgelegewelle vom Eingang oder Ausgang abgekoppelt wird. In diesem Fall wird eine Leistungsübertragung mit optimalem Wirkungsgrad im direkten Durchtrieb realisiert. Um die dritte schaltbare Kupplung schalten zu können, erfolgt ebenfalls ein Angleichen der Drehzahlen zwischen Eingang und Ausgang, vorzugsweise durch Reduzierung der Antriebsmaschinendrehzahl.

Gemäß einer besonders vorteilhaften Ausgestaltung ist ferner dem Sekundärrad eine Bremseinrichtung zugeordnet. Diese kann vielgestaltig ausgeführt sein. Diese dient dabei der Abbremsung oder vorzugsweise Festsetzung des Sekundärrades, wobei bei mechanischer Leistungsübertragung die hydrodynamische Kupplung bei Befüllung als hydrodynamischer Retarder fungiert, in dem sich der Ausgang über das dritte und zweite Vorgelege oder aber bei direkter Kopplung mit dem Primärrad am als Stator fungierenden Sekundärrad abstützt.

Erfindungsgemäß werden zur Verschleißreduzierung als schaltbare Kupplungen vorzugsweise synchron schaltbare, formschlüssige Kupplungen eingesetzt, wobei diese wiederum vorzugsweise als Klauenkupplung ausgebildet sind. Ausführungen mit kraftschlüssigen Kupplungen sind ebenfalls denkbar.

Bei Kombination der Überbrückungsschaltung mit der hydrodynamischen Komponente sind der Eingang und Ausgang der so gebildeten Baugruppe
a) koaxial oder
b) parallel zueinander angeordnet.

Vorzugsweise erfolgt aus Gründen eines einfachen und platzsparenden Aufbaus der Überbrückungsschaltung die Anordnung koaxial. Überbrückungsschaltung und hydrodynamische Komponente können dabei als bauliche Einheit oder aber getrennte Baueinheiten ausgeführt sein. Im letztgenannten Fall kann die Überbrückungsschaltung auch mit dieser nachgeordneten Drehzahl-/Drehmomentwandlungseinrichtungen zu einer baulichen Einheit zusammengefasst werden. In diesem Fall ist die Ausbildung der hydrodynamischen Komponente nahezu unabhängig von dem die Drehzahl-/Drehmomentwandlungseinrichtungen umfassenden Getriebe.

Die hydrodamische Komponente kann dabei als hydrodynamische Kupplung frei von einem Leitrad oder hydrodynamischem Drehzahl-/Drehmomentwandler ausgeführt sein. Letztere umfasst zusätzlich wenigstens ein Leitrad.

Gemäß einer besonders vorteilhaften Weiterentwicklung erfolgt die Realisierung der Drehzahlgleichheit bei gewünschter Überbrückung zwischen den beiden Ausgängen von erstem und zweitem Vorgelege durch Berücksichtigung des Schlupfes, d. h. insbesondere der Drehzahldifferenz zwischen Primärrad und Sekundärrad der hydrodynamischen Komponente für den Zustand, bei welchem eine Überbrückung gewünscht wird, bei der Dimensionierung der einzelnen Vorgelege. Dazu wird ein bestimmter vordefinierter Schlupfwert an der hydrodynamischen Komponente zugrunde gelegt, der frei gewählt sein kann oder aber durch die Leistungsmerkmale der hydrodynamischen Komponente charakterisiert ist (beispielsweise ca. 20%), die noch einen hinsichtlich des Wirkungsgrades optimalen Betrieb zulassen würden, und der eine bestimmte vordefinierte Drehzahldifferenz zwischen Primärrad und Sekundärrad charakterisiert. Diese Drehzahldifferenz wird bei der Auslegung der beiden Vorgelege berücksichtigt, so dass diese an den Ausgängen, insbesondere den mit der parallel bzw. exzentrisch zur hydrodynamischen Komponente angeordneten Vorgelegewelle koppelbaren Zahnrädern berücksichtigt ist. Die Dimensionierung der einzelnen miteinander kämmenden Stirnräder hinsichtlich ihrer Abmessungen sowie Zähnezahl und/oder Zahnform und Auslegung ergibt sich dabei als Funktion der Drehzahldifferenz n_{P} - n_{T} zwischen Primärrad und Sekundärrad. Dadurch ist es möglich, bei Leistungsübertragung über den ersten Leistungszweig, d. h. einer hydrodynamischen Leistungsübertragung bei Einstellung des bestimmten Schlupfwertes an der hydrodynamischen Komponente, insbesondere der hydrodynamischen Kupplung, ohne zusätzliche Maßnahmen die Überbrückung bei Vorliegen dieser Drehzahldifferenz vorzunehmen, indem die schaltbare Kupplung in eine Schaltstellung verbracht wird, die nunmehr das zweite mit dem Primärrad gekoppelte Vorgelege mit der Vorgelegewelle verbindet und damit einen Durchtrieb zwischen dem mit dem Primärrad gekoppelten Eingang der Überbrückungsschaltung bzw. dem Primärrad und damit der mit dieser gekoppelten Antriebsmaschine und dem Ausgang der Überbrückungsschaltung über die Vorgelege zumindest teilweise parallel zur Rotationsachse der hydrodynamischen Komponente ermöglicht.

Die Dimensionierung, insbesondere Auslegung der einzelnen Stirnräder hinsichtlich Zähnezahl, Durchmesser und/oder den den Eingriff bestimmenden Parametern ist als Funktion der Drehzahldifferenz, bei welcher eine Überbrückung erfolgen soll, definiert. Bezüglich der konkreten Umsetzung unter Berücksichtigung des Schlupfes in den Übersetzungsverhältnissen sind unterschiedliche Möglichkeiten denkbar. Dies kann beispielsweise allein durch Änderung der Teilung an den einzelnen Stirnrädern bei gleichbleibendem Durchmesser, insbesondere Kopfkreisdurchmesser, Fußkreisdurchmesser oder mittlerer Durchmesser erfolgen, wobei in diesen Fällen im wesentlichen die Zahnbreite variiert wird. Eine andere Möglichkeit besteht darin, dass eine Mehrzahl, vorzugsweise alle die Verzahnung eines Stirnrades charakterisierenden Parameter in entsprechender Weise anzupassen und zu ändern. Vorzugsweise werden dabei jedoch immer Lösungen gewählt, die sich neben einem optimalen Wirkungsgrad durch geringe bauliche Modifikationen auszeichnen und bei denen auf standardisierte Bauteile zurückgegriffen werden kann. Im Einzelnen wird dabei die Drehzahl des mit dem Sekundärrad drehfest gekoppelten und über die schaltbare Kupplung mit dem Ausgang der Überbrückungsschaltung zu verbindenden Elementes in Höhe der Drehzahldifferenz zur Drehzahl des Primärrades bzw. des mit diesen drehfest gekoppelten und über die schaltbare Kupplung mit dem Ausgang verbundenen Elementes verkleinert.

Das erste und das zweite Vorgelege sind koaxial und parallel zueinander angeordnet. In Abhängigkeit der Anordnung von Primärrad und Sekundärrad zwischen dem mit dem Eingang der aus Überbrückungsschaltung und hydrodynamischer Komponente bestehenden Baugruppe und dem Ausgang dieser in axialer Richtung betrachtet, erfolgt dabei die Anordnung des ersten und des zweiten Vorgeleges in axialer Richtung nebeneinander. Der Eingang der Baugruppe wird dabei vom Primärrad bzw. einem mit diesem drehfest verbundenen Element bzw. dem ersten Eingang der Überbrückungsschaltung gebildet. Der Ausgang der bildbaren Baugruppe aus hydrodynamischer Komponente und Überbrückungsschaltung wird vom Ausgang der Überbrückungsschaltung gebildet. Dieser dient der Kopplung mit nachgeordneten Drehzahl-/Drehmomentwandlungseinrichtungen. Bei Anordnung des Primärrades in axialer Richtung vor dem Sekundärrad erfolgt die Anordnung des ersten Vorgeleges vor dem zweiten Vorgelege. Andere Möglichkeiten sind denkbar. Bezüglich der Ausgestaltung der Vorgelege bestehen eine Vielzahl von Möglichkeiten. Vorzugsweise sind diese als einfache Stirnradsätze ausgeführt. Diese umfassen dabei jeweils zwei miteinander kämmende Stirnräder, wobei jeweils ein erstes Stirnrad drehfest mit dem Sekundärrad beziehungsweise für das zweite Vorgelege drehfest mit dem Primärrad verbunden ist, während die jeweils mit diesen kämmenden zweiten Stirnräder drehfest über die erste schaltbare Kupplung mit der Vorgelegewelle koppelbar sind. Dies gilt auch für das mit der Vorgelegewelle drehfest gekoppelte oder vorzugsweise drehfest koppelbare dritte Vorgelege, welches wiederum drehfest mit dem Ausgang A der Überbrückungsschaltu ng verbindbar oder verbunden ist bzw. die die Gangstufen des nachordenbaren Getriebes beschreibenden einzelnen Vorgelege im Fall der Ausbildung des Ausganges der Überbrückungsschaltung von der Vorgelegewelle.

Gemäß einer besonders vorteilhaften Ausführung ist zwischen dem Sekundärrad und den Vorgelegen der Überbrückungsschaltung ein Freilauf vorgesehen. Dieser ist ferner der Anbindung der Bremseinrichtung an das Sekundärrad in Leistungsflussrichtung zwischen Eingang und Ausgang des Anfahrelementes betrachtet, nachgeschaltet. Über diesen ist es möglich, eine Berghaltefunktion zu realisieren und ferner auch bei befüllter hydrodynamischer Kupplung eine Entkopplung dieser vom Antriebsstrang in Zusammenwirkung mit der Bremseinrichtung zu realisieren.

Die erfindungsgemäße Lösung wird nachfolgend anhand von Figuren erläutert. Darin ist im einzelnen Folgendes dargestellt:
- Figur 1a - 1d: verdeutlichen in schematisch vereinfachter Darstellung das Grundprinzip und den Grundaufbau einer erfindungsgemäß gestalteten Überbrückungsschaltung durch exzentrische Anordnung der Schaltelemente der einzelnen Betriebsphasen;
- Figur 2a - 2e: verdeutlichen in schematisch vereinfachter Darstellung anhand einer besonders vorteilhaften Ausgestaltung eine Weiterentwicklung der erfindungsgemäßen Lösung gemäß Figur 1 in den einzelnen Betriebsphasen;
- Figur 3: verdeutlicht eine vorteilhafte Weiterentwicklung einer Ausführung gemäß Figur 2 unter Vermeidung einer Drehzahlanpassung der mit dem Eingang koppelbaren Antriebsmaschine;
- Figuren 4: verdeutlicht eine Ausführung gemäß Figur 1 mit Freilauf.

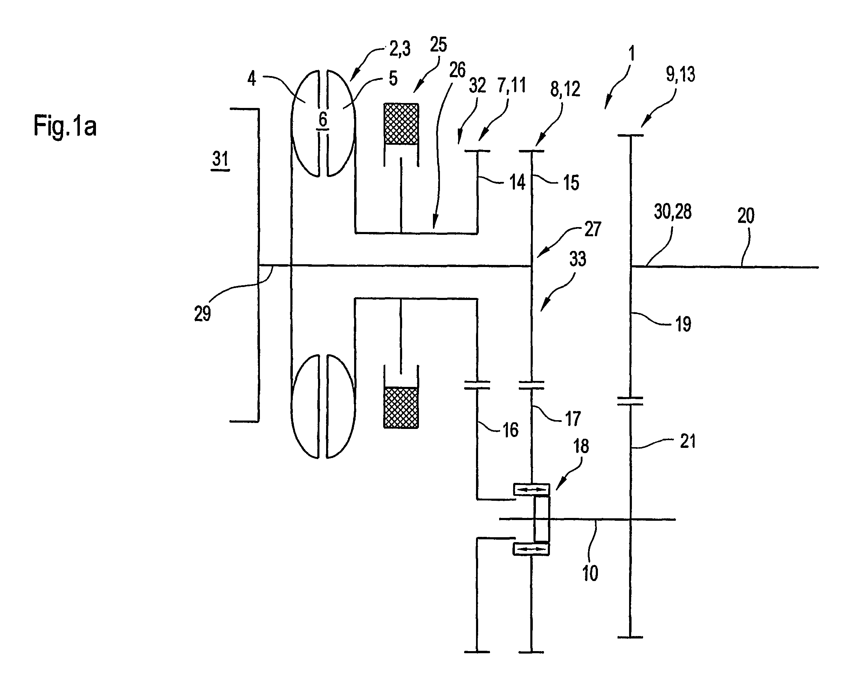

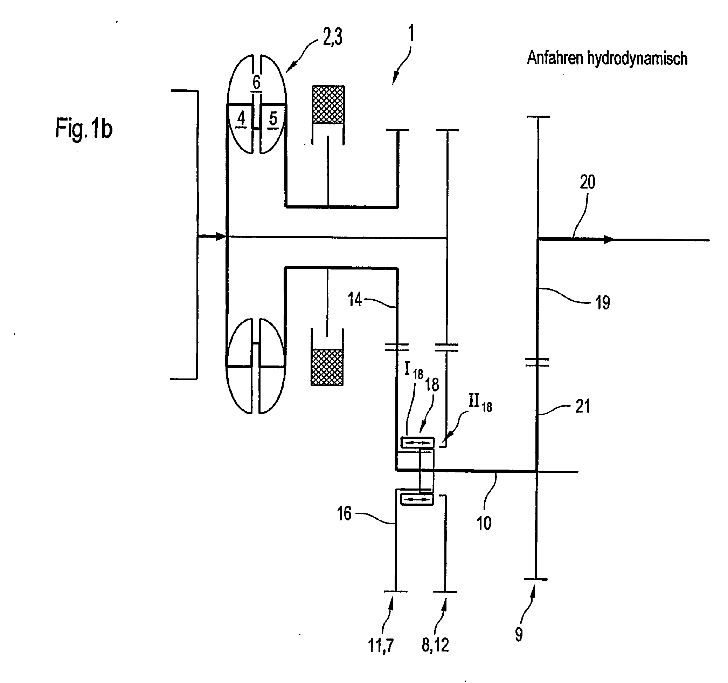

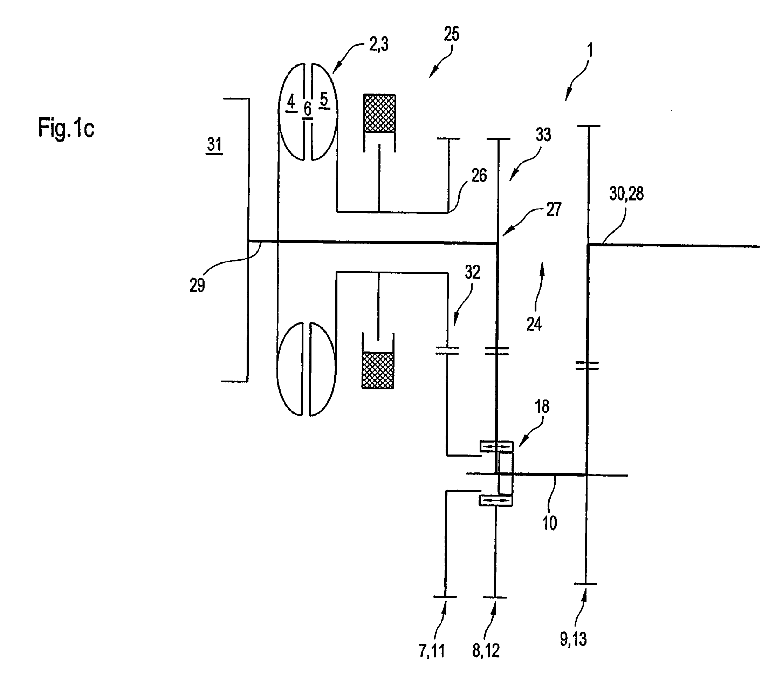

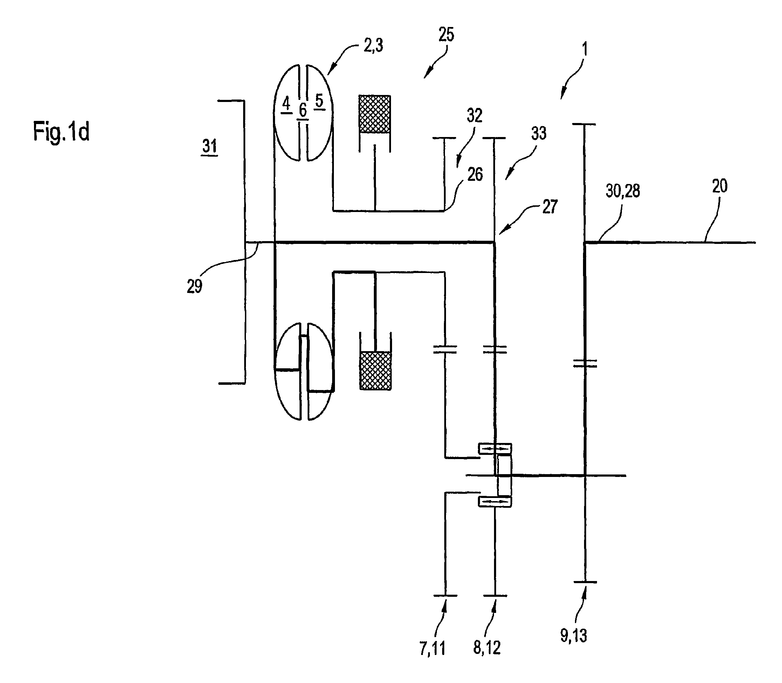

Die Figur 1 a verdeutlicht in schematisch vereinfachter Darstellung das Grundprinzip und den Grundaufbau einer erfindungsgemäß gestalteten Überbrückungsschaltung 1, die einer hydrodynamischen Komponente 2 zugeordnet ist. Beide bilden in Kombination miteinander eine Baugruppe 25. Die hydrodynamische Komponente 2 ist dabei im dargestellten Fall als hydrodynamische Kupplung 3 ausgeführt. Diese umfasst mindestens ein mit einem hier angedeuteten Antrieb 31 wenigstens mittelbar drehfest verbindbares Primärrad 4 und ein mit einem Abtrieb wenigstens mittelbar drehfest verbindbares Sekundärrad 5. Das Primärrad 4 bildet dabei einen Eingang 29 der Baugruppe 25. Das Sekundärrad 5 ist wenigstens mittelbar mit dem Ausgang 30 der Baugruppe 25 verbindbar. Diese Kopplung erfolgt über die Überbrückungsschaltung 1. Eingang 29 und Ausgang 30 sind vorzugsweise jedoch nicht zwingend koaxial angeordnet. Primärrad 4 und Sekundärrad 5 bilden dabei einen mit Betriebsmittel befüllbaren Arbeitsraum 6 miteinander. Die Überbrückungsanordnung 1 umfasst erfindungsgemäß zwei Eingänge, einen ersten Eingang 26, der mit dem Sekundärrad 5 wenigstens unmittelbar, d. h. direkt oder über weitere Elemente drehfest verbunden ist, und einen zweiten Eingang 27, der wenigstens mittelbar, d. h. direkt oder über weitere Elemente drehfest mit dem Primärrad 4 verbunden ist. Ferner vorgesehen ist ein Ausgang 28, der den Ausgang der Baugruppe 25 bildet. Jeder Eingang 26 oder 27 ist dabei wahlweise mit dem Ausgang 28 über Übertragungselemente verbindbar. Dadurch werden zwei Leistungszweige erzeugt, ein erster Leistungszweig 32 und ein zweiter Leistungszweig 33. Der erste Leistungszweig ist durch die ausschließliche Übertragung der Leistung auf hydrodynamischen Weg charakterisiert. Der zweite Leistungsweg ist durch die rein mechanische Leistungsübertragung charakterisiert. Die Kopplung erfolgt wahlweise, d. h. jeweils nur ein Eingang ist mit dem Ausgang 28 verbunden. Dazu umfasst die Überbrückungsschaltung 1 zwei Vorgelege, ein erstes Vorgelege 7 und ein zweites Vorgelege 8. Das erste Vorgelege 7 ist dabei drehfest mit dem Sekundärrad 5 verbunden. Das zweite Vorgelege 8 ist drehfest mit dem Primärrad 4 verbunden. Die Verbindung erfolgt dabei wenigstens mittelbar, d. h. entweder direkt mit den entsprechenden Komponenten oder über weitere drehfest mit diesem gekoppelte Elemente. Erfindungsgemäß ist ferner eine zwischen dem ersten Vorgelege 7 und dem zweiten Vorgelege 8 angeordnete schaltbare Kupplung 18 vorgesehen, welche wahlweise der Kopplung zwischen dem ersten Vorgelege 7 oder dem zweiten Vorgelege 8 mit einer über ein drittes Vorgelege 9 gekoppelten Vorgelegewelle 10 ermöglicht. Die einzelnen Vorgelege, erstes Vorgelege 7, zweites Vorgelege 8 und drittes Vorgelege 9 sind dabei vorzugsweise als Stirnradsätze ausgeführt. Diese sind für das erste Vorgelege 7 mit 11, für das zweite Vorgelege 8 mit 12 und für das dritte Vorgelege 9 mit 13 bezeichnet. Die Ritzel 14 und 15 der Stirnradsätze 11 und 12 des ersten Vorgeleges 7 und des zweiten Vorgeleges 8 sind dabei jeweils mit dem Primärrad 4 beziehungsweise dem Sekundärrad 5 wie beschrieben drehfest verbunden. Die mit diesen koppelbaren Stirnräder 16 für den Stirnradsatz 11 des ersten Vorgeleges 7 und 17 des Stirnradesatzes 12 des zweiten Vorgeleges 8 sind dabei wahlweise über die schaltbare Kupplung 18 der Vorgelegewelle 10 verbindbar. Die schaltbare Kupplung 18 ist dabei parallel zum Eingang 29 bzw. zum Primärrad 4 oder Sekundärrad 5 angeordnet. Die Vorgelegewelle 10 kann dabei als Voll- oder Hohlwelle ausgeführt sein. Diese ist parallel zu einer theoretischen Achse zwischen Eingang 29 bzw. Ausgang 28 bzw. zur hydrodynamischen Kupplung 3 angeordnet. Diese ist dabei drehfest mit einem Stirnrad 21 des Stirnradsatzes 13 des dritten Vorgeleges 9 gemäß einer ersten Ausführungsform verbunden. Das mit diesem Stirnrad 19 kämmende Stirnrad 21 des dritten Vorgeleges 9 ist drehfest mit dem Ausgang 28, insbesondere der von diesem gebildeten Welle 20, verbunden. Im dargestellten Fall ist somit die zur Umgehung des Leistungsflusses über die hydrodynamische Komponente 2, insbesondere die hydrodynamische Kupplung 3 vorgesehene schaltbare Kupplung 18 nicht koaxial zur hydrodynamischen Kupplung 3 angeordnet, sondern parallel beziehungsweise exzentrisch. Die Realisierung der Umschaltung des Leistungsflusses zwischen hydrodynamischer Leistungsübertragung und mechanischer Leistungsübertragung erfolgt über die schaltbare Kupplung 18 mit Hilfe der beiden Vorgelege - erstes Vorgelege 7 und zweites Vorgelege 8 -, wobei der Leistungsfluss entsprechend der Schaltstellung der schaltbaren Kupplung 18 entweder über das erste Vorgelege 7 oder das zweite Vorgelege 8 vom Ausgang 28 erfolgt und in beiden Fällen über das dritte Vorgelege 9 zum koaxial zum Eingang 29 angeordneten Ausgang 28 geführt wird. Eine andere denkbare hier jedoch nicht dargestellte Möglichkeit besteht darin, jedem Leistungszweig, d.h. jedem Vorgelege eine eigene schaltbare Kupplung zuzuordnen. Die Anordnung erfolgt dabei koaxial oder exzentrisch zum Anfahrelement und kann beliebig im Leistungsweg angeordnet sein, d.h. einem Element der das Vorgelege bildenden Drehzahl-/Drehmomentwandlungseinrichtung zugeordnet sein. Die Überbrückungsfunktion, welche bei konventionellen Ausführungen durch die Realisierung einer drehfesten Kopplung zwischen Primärrad 4 und Sekundärrad 5 erzeugt wird, wird erfindungsgemäß durch den Leistungsfluss über zwei Wege realisiert, wobei diese Lösung frei von einer drehfesten Verbindung zwischen Primärrad 4 und Sekundärrad 5 ist. Im Zustand Anfahren befindet sich dabei die schaltbare Kupplung 18 in der in der Figur 1b dargestellten Funktionsstellung I₁₈, bei welcher diese eine drehfeste Verbindung zwischen dem Stirnrad 16 des Stirnradsatzes 11 des ersten Vorgeleges 7 mit der Vorgelegewelle 10 realisiert. Der Leistungsfluss erfolgt dann im Traktionsbetrieb betrachtet zwischen dem Antrieb 31 und dem Abtrieb vom Eingang 29 über die in diesem Funktionszustand mit Betriebsmittel befüllte hydrodynamische Komponente 2, insbesondere hydrodynamische Kupplung 3, auf das drehfest mit dem Sekundärrad 5 gekoppelte Ritzel 14 des ersten Vorgeleges 7, das mit diesem kämmende Stirnrad 16 auf die Vorgelegewelle 10 und von dieser auf das dritte Vorgelege 9, insbesondere das Stirnrad 21 und das drehfest mit dem Ausgang 28 gekoppelte Stirnrad 19 auf diesen beispielsweise die diesen bildende Welle 20 oder ein anderes drehfest mit diesem gekoppelten Element. Die Umschaltung auf rein mechanischen Betrieb erfolgt durch Schaltung der Kupplung 18, insbesondere durch Realisierung der Schaltstellung II₁₈, in welcher das zweite Vorgelege 8 drehfest mit der Vorgelegewelle 10 und damit dem dritten Vorgelege 9 verbunden wird. Der Leistungsfluss erfolgt auch hier im Traktionsbetrieb betrachtet vom Eingang 29 in Richtung zum Ausgang 30 über das drehfest mit dem Primärrad 4 gekoppelte zweite Vorgelege 8, insbesondere das Ritzel 15 auf das Stirnrad 17, die Vorgelegewelle 10, das Stirnrad 19, 21 und von diesem auf die mit diesem drehfest gekoppelte Welle beziehungsweise ein anderes mit diesem drehfest gekoppeltes Element. Dieser Leistungsfluss ist in Figur 1c dargestellt. Die hydrodynamische Kupplung wird in diesem Zustand aus dem Leistungsfluss herausgenommen und nur das Primärrad 4 mitgeschleppt. Das Sekundärrad 5 ist vollständig entkoppelt. Die Kupplung 3 kann daher befüllt bleiben.

Für den Bremsbetrieb gemäß Figur 1d wird die hydrodynamische Komponente 2, insbesondere die hydrodynamische Kupplung 3, als hydrodynamischer Retarder benutzt. Dazu ist im Sekundärrad 5 eine Bremseinrichtung 22 zugeordnet, welche vielgestaltig ausgeführt sein kann. Diese dient der Festsetzung des Sekundärrades 5. Dies gilt für die mechanische Betriebsweise gemäß Figur 1c, das heißt, in diesem Fall erfolgt der Leistungsfluss vom Ausgang 28 bzw. 30 über das dritte Vorgelege 9 auf das zweite Vorgelege 8 zum Primärrad 4, welches in diesem Funktionszustand als Rotor fungiert. Das Sekundärrad 5 ist in diesem Funktionszustand als Stator ausgeführt. Der Abtrieb A stützt sich somit über die beiden Vorgelege, drittes Vorgelege 9 und zweites Vorgelege 8 und dem mit diesen drehfest verbundenen Primärrad 4 am Stator, der vom Sekundärrad 5 gebildet wird, ab.

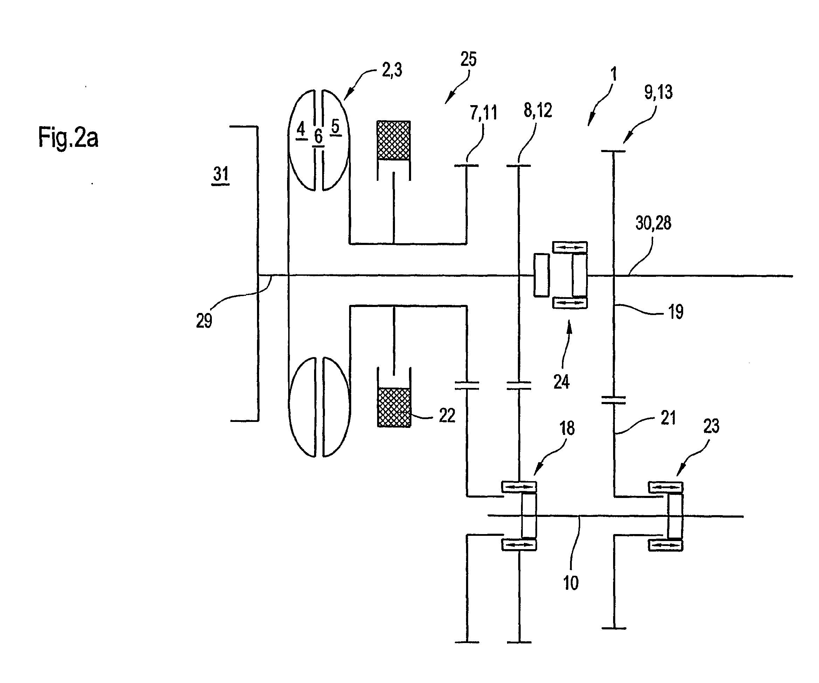

Der Leistungsfluss über das Vorgelege, insbesondere die Vorgelege 7, 8 und 9 ermöglichen bei Kopplung der hydrodynamischen Kupplung 3 mit Überbrückungsanordnung 1 mit den Gangstufen eines Getriebes eine Untersetzung in den einzelnen Gangstufen. Zwar kann je nach Auslegung des Übersetzungsverhältnisses in den Vorgelegen unterschiedlichen Übersetzungen Rechnung getragen werden, jedoch wird auch bei der in der Regel gewünschten 1 : 1 Übersetzung aufgrund der Leistungsübertragung über die Vorgelege 7, 8 mit einem schlechteren Wirkungsgrad zu rechnen seien. Um in diesem Fall eine starre Kupplung zwischen dem Eingang 29 und dem Ausgang 30 der Baugruppe 25 bzw. dem Primärrad 4 oder dem Eingang 27 der Überbrückungsschaltung 1 zu erzielen, ist erfindungsgemäß gemäß einer besonders vorteilhaften Ausgestaltung in der Figur 2a eine weitere dritte Kupplung 24 zwischen dem zweiten und dem dritten Vorgelege 8 und 9 angeordnet, die schaltbar ist und koaxial zur hydrodynamischen Kupplu ng 3 sowie dem Eingang 29 und dem Ausgang 30 der Baugruppe 25 bzw. den Eingängen 26, 27 und dem Ausgang 28 der Überbrückungsschaltung 1 angeordnet ist. Diese dritte Kupplung 24 ermöglicht dabei den direkten mechanischen Durchtrieb vom Eingang 29 zum Ausgang 30 bzw. den Eingängen 26, 27 zum Ausgang 28 frei von der Führung über weitere Drehzahl-/Drehmomentwandlungseinrichtungen. Die Drehzahl und das Moment am Eingang 29 entspricht dabei bei Schaltung der Kupplung 24 denen am Ausgang. Bei dieser Ausführung ist ferner zur Entkopplung des dritten Vorgeleges 9 von der Vorgelegewelle 10 eine weitere zweite schaltbare Kupplung 23 vorgesehen. Diese dient der wahlweisen Kopplung des dritten Vorgeleges 9 mit der Vorgelegewelle 10, insbesondere des Stirnrades 21 mit der Welle 10. Bei allen in den Figuren 1a bis 1d sowie 2a beschriebenen Ausführungen sind die schaltbaren Kupplungen, insbesondere die schaltbare Kupplung 18 sowie 23 und 24, vorzugsweise als formschlüssige synchron schaltbare Kupplungen, vorzugsweise in Form von Klauenkupplungen, ausgeführt. Andere Ausführungen, insbesondere in Form von kraftschlüssigen Kupplungen, sind ebenfalls denkbar. Diese arbeiten jedoch mit Schlupf, wodurch der Wirkungsgrad des Gesamtsystems verringert wird. Daher werden erfindungsgemäß vorzugsweise formschlüssige, synchron schaltbare Kupplungen zum Einsatz gelangen.

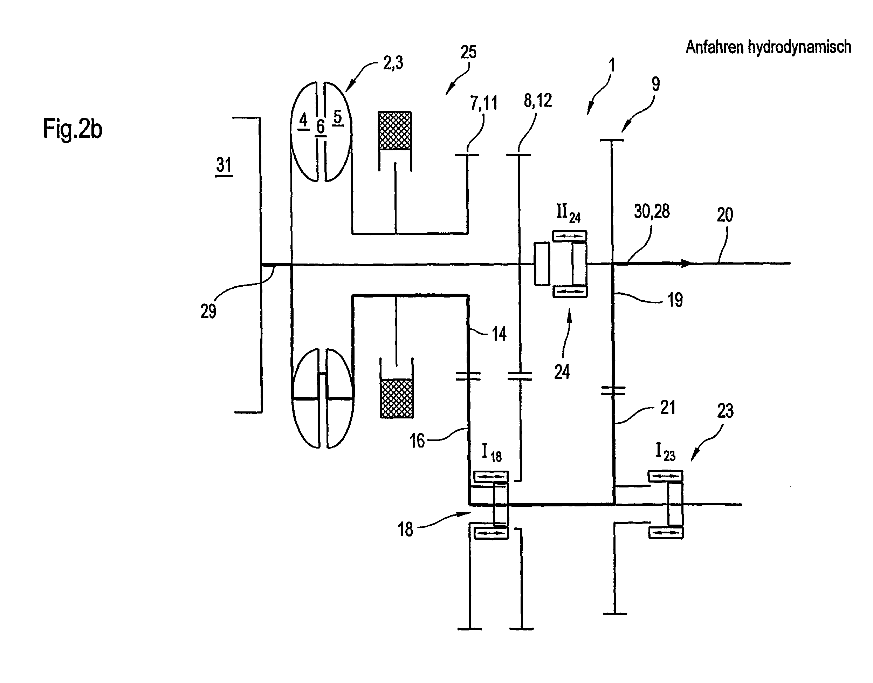

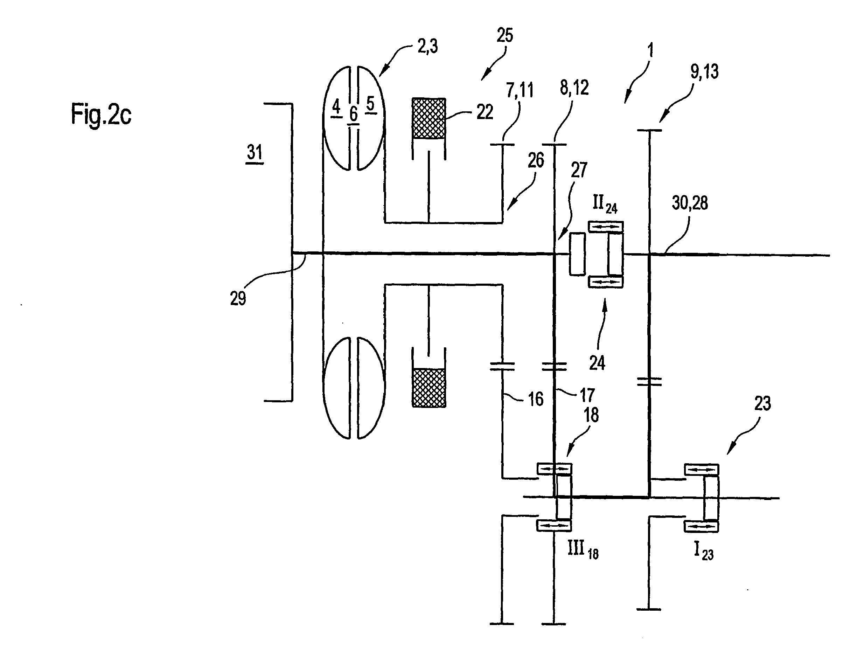

Die Figur 2b verdeutlicht für die Ausführung gemäß Figur 2a den Leistungsfluss der hydrodynamischen Komponente 2 während des Anfahrvorganges, das heißt im hydrodynamischen Betrieb. In diesem ist die hydrodynamische Komponente 2 mit Betriebsmittel befüllt. Der Leistungsfluss erfolgt über die hydrodynamische Komponente 2, insbesondere die hydrodynamische Kupplung 3. Die erste schaltbare Kupplung 18 befindet sich in der Schaltstellung I₁₈, d. h., diese realisiert die drehfeste Verbindung zwischen dem ersten Vorgelege 7, insbesondere dem Stirnrad 16 mit der Vorgelegewelle 10. Das zweite Vorgelege 8 ist von der Vorgelegewelle 10 entkoppelt. Die zweite Kupplung 23 befindet sich ebenfalls in dieser ersten Schaltstellung I₂₃, in welcher eine drehfeste Verbindung mit der Vorgelegewelle 10 realisiert wird. Die dritte schaltbare Kupplung 24 befindet sich in der zweiten Schaltstellung II₂₄, d. h. ist gelöst beziehungsweise geöffnet. Der Leistungsfluss erfolgt dabei vom Eingang 29 über das Primärrad 4, das Sekundärrad 5 auf das erste Vorgelege 7, insbesondere das Ritzel 14, das Stirnrad 16 auf die Vorgelegewelle 10, das dritte Vorgelege 9, insbesondere das Stirnrad 21 sowie das drehfest mit der Welle 20 gekoppelte Stirnrad 19. Die Umschaltung beziehungsweise Überbrückung der hydrodynamischen Komponente 2, insbesondere der hydrodynamischen Kupplung 3, erfolgt durch den Wechsel des Leistungsweges, insbesondere durch Schaltung der ersten schaltbaren Kupplung 18, wobei diese die in die Schaltstellung III₁₈ gemäß Figur 2c verbracht wird, die eine drehfeste Verbindung mit dem zweiten Vorgelege 8 und der Vorgelegewelle 10 ermöglicht. Das erste Vorgelege 7 ist dabei von der Vorgelegewelle 10 entkoppelt. Die zweite Kupplung 23 verbleibt in ihrer ersten Schaltstellung I₂₃, d. h. der Realisierung der drehfesten Verbindung zwischen dem dritten Vorgelege 9 und der Vorgelegewelle 10. Die Umschaltung erfolgt dabei durch eine gezielte Rücknahme der Drehzahl am Eingang 29 bzw. dem Eingang 27 der Überbrückungsschaltung, insbesondere der mit dieser drehfest gekoppelten Antriebsmaschine und der schlupfübertragenden hydrodynamischen Kupplung 3, um eine Drehzahlgleichheit zwischen den Stirnrädern 16 und 17 der Vorgelege 7 und 8 zu erzielen. Der sich in der Schaltstellung III₁₈ der ersten schaltbaren Kupplung 18 ergebende Leistungsfluss unter Umgehung der hydrodynamischen Komponente 2, insbesondere der hydrodynamischen Kupplung 3 ergebende Leistungsfluss, ist in der Figur 2c dargestellt. Auch in diesem Betriebszustand sind nur die erste und zweite Kupplung 18, 23 betätigt, während die dritte Kupplung 24 in der Schaltstellung II₂₄ geöffnet ist. Der Leistungsfluss erfolgt somit nicht direkt, sondern über die Vorgelege 8 und 9 und damit parallel zur Verbindungsachse zwischen Rotationsachse der hydrodynamischen Komponente 2 und dem Ausgang 28 der Überbrückungsschaltung **1**.

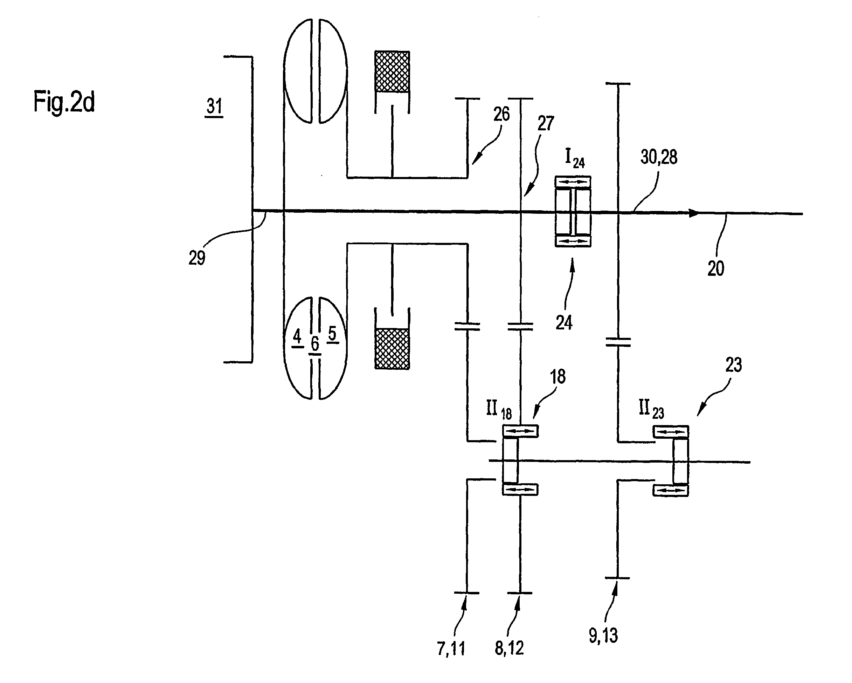

Die Figur 2d verdeutlicht demgegenüber die unter Ausnutzung der dritten Kupplung 24 mögliche Leistungsübertragung mit einer Übersetzung von 1 : 1 zwischen dem Eingang 29 und dem Ausgang 30 der Baugruppe 25 bzw. den Eingängen 26 und 27 der Überbrückungsschaltung 1 und dem Ausgang 28. In diesem ist dann die schaltbare Kupplung 24 geschlossen, d. h., befindet sich in der ersten Schaltstellung I₂₄, welche den Eingang 27, insbesondere das zweite Vorgelege 8 mit dem dritten Vorgelege 9, insbesondere das Ritzel 15 mit dem Stirnrad 19, drehfest verbindet. Die erste schaltbare Kupplung 18 und die zweite schaltbare Kupplung 23 sind in diesem Funktionszustand geöffnet, d. h., befinden sich in der Schaltstellung II₁₈ beziehungsweise II₂₃. Die Leistungsübertragung erfolgt dabei koaxial zwischen Eingang 29 und Ausgang 30 der Baugruppe 25 frei von der Übertragung über Drehzahl-/Drehmomentwandlungseinrichtungen. Der Eingang 29 ist mit dem Ausgang 30 starr gekoppelt.

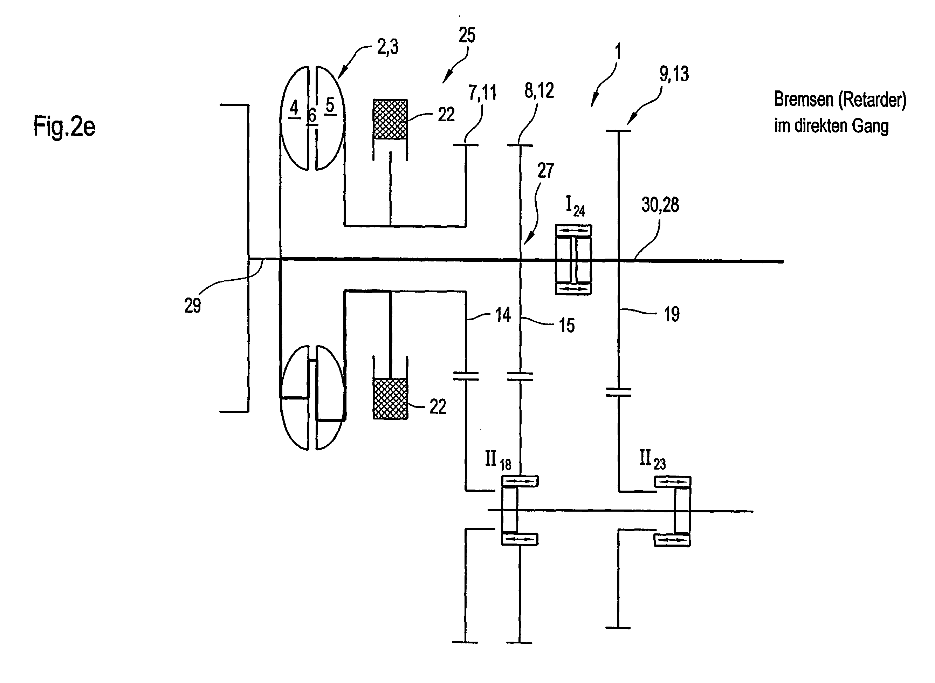

Demgegenüber verdeutlicht die Figur 2e die Realisierung des Bremsbetriebes im sogenannten direkten Gang, d. h. bei Leistungsübertragung vom Eingang 29 zum Ausgang 30. Auch hier ist die dritte Kupplung 24 geschlossen, während die beiden anderen Kupplungen 18 und 23 geöffnet sind und somit die einzelnen Vorgelege, insbesondere die Vorgelege 7, 8 und 9 vom Ausgang 30 bzw. 28 der Überbrückungsschaltung 1 entkoppeln. Der Ausgang 30 bzw. 28 und die mit diesen verbundenen Drehzahl-/Drehmomentwandlungseinrichtungen stützen sich dabei in diesem Funktionszustand über das Primärrad 4 am als Stator fungierenden Sekundärrad 5 ab. Letzteres wird durch Betätigung der Bremseinrichtung 22 festgesetzt, vorzugsweise an einem runden Bauteil. Damit kann in allen mechanischen Gängen immer eine Bremswirkung erzielt werden, wobei diese aufgrund des direkten Durchtriebes mit höchstmöglicher Übersetzung realisiert werden kann.

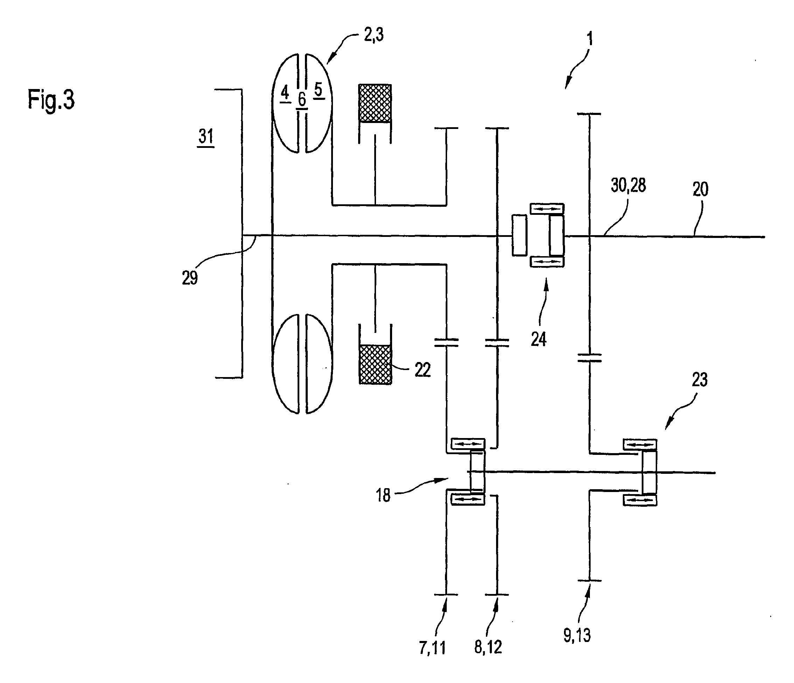

Bei allen in den Figuren 1 und 2 dargestellten Ausführungen und Funktionsweisen wurden für das erste Vorgelege 7 und das zweite Vorgelege 8 gleiche Übersetzungen gewählt. Gemäß einer vorteilhaften Weiterentwicklung ist es jedoch auch möglich, wie in der Figur 3 anhand einer Ausführung gemäß Figur 2a dargestellt, eine Schaltung ohne Drehzahlanpassung des mit dem Eingang 29 bzw. dem Eingang 27 direkt gekoppelten Primärrades 4 vorzunehmen und gleichzeitig eine Verbesserung der Beschleunigung durch eine höhere Zugkraft in der Mechanik zu erzielen. Dies wird gemäß einer besonders vorteilhaften Ausgestaltung dadurch realisiert, dass die Vorgelegeübersetzung zwischen dem ersten Vorgelege 7 und dem zweiten Vorgelege 8 um den Schlupfbetrag, bei welchem man überbrücken möchte, verändert wird. Dies bedeutet im einzelnen, dass bei gleichbleibender Übersetzung für das erste Vorgelege 7 die Übersetzung am zweiten Vorgelege 8 verringert wird. Zur Vermeidung einer Drehzahlanpassung des mit dem Eingang 29 bzw. dem Eingang 27 direkt gekoppelten Primärrades 4 wird dazu die Drehzahldifferenz, bei welcher eine Überbrückung gewünscht wird, durch die Auslegung bzw. Dimensionierung der einzelnen Vorgelege, insbesondere des drehfest mit dem Sekundärrad gekoppelten Vorgeleges 7 und des drehfest mit dem Primärrad 4 gekoppelten Vorgeleges 8 kompensiert. Dabei werden beide Vorgelege mit unterschiedlicher Übersetzung ausgeführt, wobei bei Leistungsübertragung über die hydrodynamische Komponente 2 bei einer bestimmten vorgewählten Drehzahldifferenz zwischen Primärrad 4 und Sekundärrad 5, die sich in einer Drehzahlgleichheit an den Ausgängen der Vorgelege 7 und 8, insbesondere der Drehzahlen an den Stirnrädern 16 niederschlägt, vorgenommen. Dies bedeutet, dass im Zustand der Leistungsübertragung mit einem vordefinierten Schlupfbetrag zwischen Primärrad 4 und Sekundärrad 5, d. h. Drehzahldifferenz zwischen Primärrad 4 und Sekundärrad 5 eine Überbrückung aufgrund der durch die Übersetzung bedingten Drehzahlgleichheit am Ausgang der einzelnen Vorgelege 7 und 8, insbesondere an den Stirnrädern 16 und 17 möglich wird. Die Auslegung der Vorgelege 7 und 8 erfolgt derart, dass aufgrund der am Sekundärrad bei Schlupf vorliegenden geringeren Drehzahl gegenüber dem Primärrad die Drehzahl des mit dem Primärrad 4 über das Vorgelege 7 drehfest verbundenen Elementes, welches wenigstens mittelbar drehfest über die schaltbare Kupplung mit dem Ausgang 28 der Überbrückungsschaltung 1 verbindbar ist, reduziert wird bzw. die Drehzahl des mit dem Sekundärrad gekoppelten Ausgangs des ersten Vorgeleges erhöht wird. Die entsprechende Übersetzung als Funktion des zu kompensierenden Schlupfes wird dabei entsprechend den gängigen Lehren ausgewählt. Dies erfolgt durch entsprechende Dimensionierung der Zahnräder, der Verzahnung sowie der Eingriffsgeometrie. Dabei ist es möglich, in Abhängigkeit der Größe des zu kompensierenden Schlupfwertes, d. h. der zu kompensierenden Drehzahldifferenz entweder lediglich die Teilung zu beeinflussen oder aber die Gesamtgeometrie, insbesondere die Durchmesser und Zähnezahl der Stirnräder. Die konkrete Maßnahme liegt dabei im Ermessen des zuständigen Fachmannes. Der Schlupfbetrag, d. h. die Drehzahldifferenz, bei welcher überbrückt wird, wird dabei in Abhängigkeit der Eigenschaften der hydrodynamischen Komponente festgelegt bzw. gewählt. Die hydrodynamische Kupplung 1 bleibt vorzugsweise wenigstens teilbefüllt. Die Funktionsweise gestaltet sich wie in den Figuren 1 und 2 beschrieben.

Bei allen in den Figuren dargestellten Ausführungen wurde beispielhaft der Leistungsfluss zwischen Eingang 29 und Ausgang 30 im Traktionsbetrieb dargestellt und beschrieben. Auch der Schubbetrieb ist natürlich möglich.

Die erfindungsgemäße Lösung ist nicht auf die in den Figuren 1 bis 3 dargestellten Ausführungen beschränkt. Weitere Ausgestaltungen sind möglich. Die Figuren 1 bis 3 stellen lediglich Grundvarianten und vorteilhafte Ausgestaltungen des erfindungsgemäßen Grundgedankens dar. Entscheidend ist lediglich, dass durch Umschaltung zweier Leistungswege unterschiedliche Funktionsweisen realisiert werden können, wobei in dem Funktionszustand der Umgehung der hydrodynamischen Komponente eine mechanische Leistungsübertragung erfolgt, die frei von einer direkten drehfesten Kopplung zwischen Primärrad und Sekundärrad der hydrodynamischen Komponente ist. Die Leistungsführung erfolgt bei Realisierung der beiden Leistungszweige nicht direkt koaxial, sondern parallel zur theoretischen Rotationsachse des hydrodynamischen Bauelementes. Als hydrodynamisches Bauelement können dabei hydrodynamische Kupplungen oder aber hydrodynamische Drehzahl-/Drehmomentwandler Verwendung finden.

Die Figuren 1 bis 4 verdeutlichen Ausführungen mit einer beiden Vorgelegen gemeinsam zugeordneten Kupplung, die koaxial zur Vorgelegewelle angeordnet ist. Denkbar ist jedoch auch die nicht dargestellte Ausführung mit Zuordnung einer gemeinsam nutzbaren Kupplungseinrichtung koaxial zum Anfahrelement sowie auch Ausführungen mit zwei schaltbaren Kupplungen, die jeweils einem der beiden Vorgelege zugeordnet sind und an beliebiger Position im Leistungsfluss angeordnet werden können (koaxial zum Anfahrelement oder der Vorgelegewelle oder exzentrisch zu diesen). Als schaltbare Kupplungen finden, wie bereits ausgeführt, in besonders vorteilhafter Weise synchronschaltbare formflüssige Kupplungen Verwendung. Dies bedeutet, dass auf reibschlüssige Kupplungselemente vollkommen verzichtet wird. Die erforderlichen Drehzahlanpassungen zur Realisierung des Schaltvorganges werden dabei über die Steuerungstechnik vorgenommen.

Die erfindungsgemäß gestaltete Überbrückungsschaltung, welche mit nachgeordneten Drehzahl-/Drehmomentwandlungseinrichtungen zur Realisierung einer Gangstufung kombiniert werden kann, kann für sich allein oder aber zusammen mit der hydrodynamischen Komponente als bauliche Einheit vormontiert und in dieser Form angeboten werden. Beide werden zu einer Baugruppe kombiniert. Es ist jedoch auch denkbar, die Überbrückungsschaltung von einer, der hydrodynamischen Komponenten nachgeordneten Getriebeanordnung mit zu realisieren, wobei dann in diesem Fall die hydrodynamische Komponente für sich allein als selbständig handelbare Baueinheit mit dem Gesamtgetriebe kombiniert wird. Somit wird es möglich, die Überbrückung auch in das Getriebe zu verlagern, d. h. losgelöst von der hydrodynamischen Komponente zu realisieren. Dabei bietet die Möglichkeit der Überbrückungsschaltung den Vorteil, die Überbrückungsfunktion in axialer Richtung in beliebigem Abstand von der hydrodynamischen Komponente vorzunehmen.

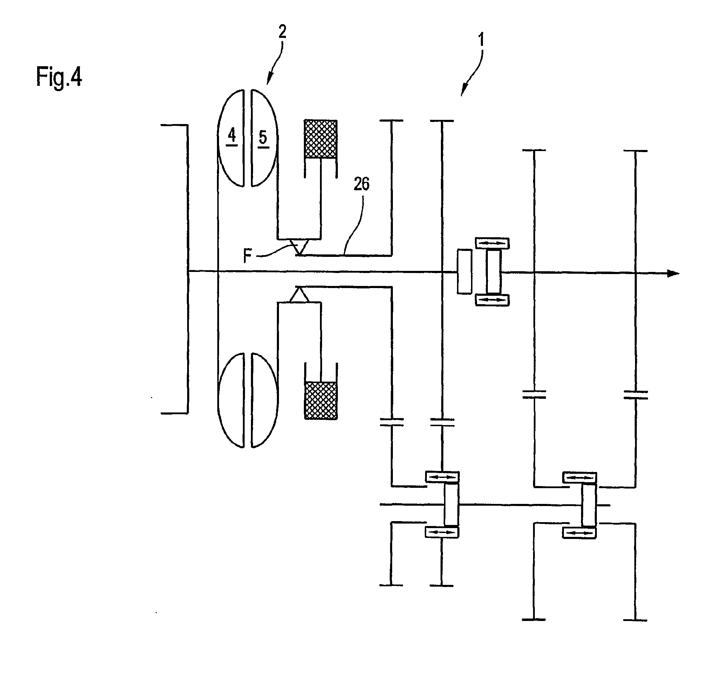

Gemäß einer besonders vorteilhaften Ausgestaltung ist entsprechend Figur 4 zwischen dem Ausgang des Anfahrelementes 2 und dem Eingang 26 der Überbrückungsschaltung 1 ein Freilauf F angeordnet. Dieser ist einer mit dem Eingang 26 gekoppelten Bremseinrichtung nachgeschaltet. Der Freilauf bewirkt bei geringerer Drehzahl des Sekundärrades 5 gegenüber dem Eingang 26 ein Leerlaufen dessen, d.h. es wird keine Leistung vom Sekundärrad 5 an die Überbrückungsschaltung 1 übertragen und umgekehrt. Bei größerer Drehzahl des Sekundärrades 5 bzw. Gleichheit besteht eine Koppelung über den Freilauf, Moment wird übertragen. Dabei kann das Sekundärrad 5 für die Zwecke über die Bremseinrichtung abgebremst werden auf eine Drehzahl von kleiner der Drehzahl am Eingang 26 der Überbrückungsschaltung 1 bis auf Null. Mit dieser Lösung ist es möglich, bei gefüllter hydrodynamischer Kupplung ein Abbremsen der Antriebsmaschine zu erzielen, ferner eine Haltefunktion am Berg, insbesondere einfache mechanische Rückrollsicherung zu gewährleisten. Bei Krafteinleitung über den Antrieb und der damit erfolgenden Momentenumkehr wird der Freilauf F in Sperrrichtung betrieben und stützt sich über die Bremseinrichtung beim Abbremsung des Sekundärrades bis auf Null an einem ortsfesten Element ab. Dieser wirkt in dieser Funktion wie ein Haltekeil für das Fahrzeug.

### Bezugszeichenliste

- 1: Überbrückungsanordnung
- 2: hydrodynamische Komponente
- 3: hydrodynamische Kupplung
- 4: Primärrad
- 5: Sekundärrad
- 6: Arbeitsraum
- 7: erstes Vorgelege
- 8: zweites Vorgelege
- 9: drittes Vorgelege
- 10: Vorgelegewelle
- 11: Stirnradsatz
- 12: Stirnradsatz
- 13: Stirnradsatz
- 14: Ritzel
- 15: Ritzel
- 16: Stirnrad
- 17: Stirnrad
- 18: erste schaltbare Kupplung
- 19: Stirnrad
- 20: Welle
- 21: Stirnrad
- 22: Bremseinrichtung
- 23: zweite schaltbare Kupplung
- 24: dritte schaltbare Kupplung
- 25: Baugruppe
- 26: Eingang
- 27: Eingang
- 28: Ausgang
- 29: Eingang
- 30: Ausgang
- 31: Antrieb
- 32: erster Leistungszweig
- 33: zweiter Leistungszweig
- 34: Stirnrad

## Patentansprüche

1. Überbrückungsschaltung (1) für eine hydrodynamische Komponente (2) in Form einer hydrodynamischen Kupplung (3), die frei von einem Leitrad ist, umfassend wenigstens ein Primärrad (4) und ein Sekundärrad (5), die einen mit Betriebsmittel befüllbaren Arbeitsraum (6) bilden;
mit zwei Eingängen (26, 27) - einem ersten mit dem Sekundärrad (5) verbundenen Eingang (26) und einem zweiten mit dem Primärrad (4) verbundenen Eingang (27) - wobei die Eingänge (26, 27) wahlweise über eine schaltbare Kupplungseinrichtung, umfassend wenigstens eine schaltbare Kupplung (18) mit einem Ausgang (28) der Überbrückungsschaltung (1) unter Bildung eines ersten oder zweiten Leistungszweiges (32, 33) verbindbar sind;
die Kopplung zwischen dem mit dem Primärrad (4) gekoppelten Eingang (27) der Überbrückungsschaltung (1) und dem Ausgang (28) der Oberbrückungsschaltung (1) zur Realisierung des zweiten Leistungszweiges (33) ist frei von einer drehfesten mechanischen Verbindung zwischen Primärrad (4) und Sekundärrad (5);
in der Kopplung zwischen den Eingängen (26, 27) der Überbrückungsschaltung (1) und dem Ausgang (30) der Überbrückungsschaltung (1) in den einzelnen Leistungszweigen (31, 33) sind Drehzahl-/Drehmomentwandlungseinrichtungen vorgesehen;
**gekennzeichnet durch** die folgenden Merkmale:
die Drehzahl-/Drehmomentwandlungseinrichtungen in den einzelnen Leistungszweigen (32, 33) umfassen jeweils ein Vorgelege - ein erstes Vorgelege (7), welches drehfest mit dem Sekundärrad (5) verbunden ist und ein zweites Vorgelege (8), welches drehfest mit dem Primärrad (4) verbunden ist;
zwischen dem ersten und dem zweiten Vorgelege (7, 8) ist die schaltbare Kupplung (18) zur wahlweisen Kopplung des ersten Vorgeleges (7) oder des zweiten Vorgeleges (8) mit dem Ausgang (30) gekoppelten Vorgelegewelle (10) angeordnet
das erste Vorgelege(7) und das zweite Vorgelege (8) weisen eine unterschiedliche Übersetzung auf, wobei die Übersetzung des zweiten Vorgeleges (8) **dadurch** charakterisiert ist, dass diese um den Betrag des Schlupfes der hydrodynamischen Komponente bei gewünschter Überbrückung gegenüber dem ersten Vorgelege (7) geändert ist;
der hydrodynamischen Komponente (2), insbesondere dem Sekundärrad (5), eine Bremseinrichtung (22) zugeordnet ist; die dem ortsfesten Festsetzen des Sekundärrades (5) dient.

2. Überbrückungsschaltung (1) nach Anspruch 1, **dadurch gekennzeichnet, daß** die schaltbare Kupplungseinrichtung eine beiden Leistungszweigen (32, 33), d.h. den Verbindungen zwischen den einzelnen Eingängen (26, 27) und dem Ausgang der Überbrückungsschaltung gemeinsam nutzbare Kupplung (18) umfasst oder wenigstens eine, jedem Leistungszweig (32, 33) separat zugeordnete schaltbare Kupplung umfasst.

3. Überbrückungsschaltung (1) nach Anspruch 1 oder 2, **dadurch gekennzeichnet, dass** die schaltbare Kupplung (18) als formschlüssige, synchron schaltbare Kupplung ausgeführt ist.

4. Überbrückungsschaltung (1) nach Anspruch 3, **dadurch gekennzeichnet, dass** die schaltbare Kupplung (18) als Klauenkupplung ausgeführt ist.

5. Überbrückungsschaltung (1) nach Anspruch 4, **dadurch gekennzeichnet, dass** das erste und das zweite Vorgelege (7, 8) koaxial und parallel zueinander angeordnet sind.

6. Überbrückungsschaltung nach Anspruch 1 oder 5, **dadurch gekennzeichnet, daß** der Ausgang der Überbrückungsschaltung (1) von der mit den Ausgängen des ersten und zweiten Vorgeleges gekoppelten Vorgelegewelle (10) gebildet wird.

7. Überbrückungsschaltung (1) nach Anspruch 1 oder 5, **dadurch gekennzeichnet, daß** die Ausgänge des ersten und zweiten Vorgeleges (7, 8) über wenigstens ein weiteres drittes Vorgelege (9) mit dem Ausgang der Überbrückungsschaltung (1) koppelbar sind.

8. Oberbrückungsschaltung (1) nach Anspruch 7, **dadurch gekennzeichnet, dass** eine weitere zweite schaltbare Kupplung (13) vorgesehen ist, die dem dritten Vorgelege (9) zugeordnet ist und das dritte Vorgelege (9) wahlweise mit der Vorgelegewelle (10) verbindet.

9. Überbrückungsschaltung (1) nach einem der Ansprüche 1 oder 5 bis 8 **dadurch gekennzeichnet, dass** die einzelnen Vorgelege (7, 8, 9) jeweils als Stirnradstufen (11,12,13) ausgeführt sind.

10. Überbrückungsschaltung (1) nach einem der Ansprüche 7 bis 9, **dadurch gekennzeichnet, dass** eine dritte schaltbare Kupplung (24) vorgesehen ist, die den mit dem Primärrad gekoppelten Eingang der Überbrückungsschaltung (1) mitdem Ausgang der Überbrückungsschaltung direkt verbindet, wobei diese beispielsweise zwischen dem zweiten (8) und dem dritten Vorgelege (9) angeordnet ist und zumindest wahlweise das zweite (8) mit dem dritten Vorgelege (9) drehfest verbindet oder aber diese Verbindung freigibt.

11. Überbrückungsschaltung (1) nach einem der Ansprüche 1 bis 12, **dadurch gekennzeichnet, dass** die schaltbaren Kupplungen (23, 24) als formschlüssige, synchron schaltbare Kupplungen ausgeführt sind.

12. Überbrückungsschaltung (1) nach Anspruch 11, **dadurch gekennzeichnet, dass** die formschlüssige Kupplung als Klauenkupplung ausgeführt ist.

13. Überbrückungsschaltung (1) nach einem der Ansprüche 1 bis 12, **dadurch gekennzeichnet, dass** alle schaltbaren Kupplungen (18, 23, 24) als kraftschlüssige Kupplungen ausgeführt sind.

14. Überbrückungsschaltung (1) nach einem der Ansprüche 1 bis 13, **dadurch gekennzeichnet, dass** zwischen Sekundärrad (5) und Eingang (26) der Oberbrückungsschaltung (1) ein Freilauf (F) angeordnet ist.

15. Baugruppe (25)
mit einer hydrodynamischen Komponente (2)
mit einer Überbrückungsschaltung (1) gemäß einen der Ansprüche 1 bis 14.

## Claims

1. Lockup clutch arrangement (1) for a hydrodynamic component (2) in the form of a hydrodynamic coupling (3), which has no guide wheel, comprising at least a primary wheel (4) and a secondary wheel (5), which define a workspace (6) that can be filled with a working fluid;
having two inputs (26, 27) - a first input (26) connected to the secondary wheel (5) and a second input (27) connected to the primary wheel (4) - whereas the inputs (26, 27) can be connected selectively via a switchable clutch device, comprising at least an engageable clutch (18) having an output (28) of the lockup clutch arrangement (1) by forming a first or second power branch (32,33);
the coupling between the input (27) of the lockup clutch arrangement (1) coupled to the primary wheel (4) and the output (28) of the lockup clutch arrangement (1) for achieving the second power branch (33) has no torque-proof mechanical connection between primary wheel (4) and secondary wheel (5);
speed/torque conversion devices are provided in the coupling between the inputs (26, 27) of the lockup clutch arrangement (1) and the output (30) of the lockup clutch arrangement (1) in the various power branches (31,33); **characterised by** the following features:
the speed/torque conversion devices in the various power branches (32,33) comprise each an intermediate gear - a first intermediate gear (7), which is connected to the secondary wheel (5) in a torque-proof manner and a second intermediate gear (8), which is connected to the primary wheel (4) in a torque-proof manner;
the engageable clutch (18) for selective coupling of the first intermediate gear (7) or of the second intermediate gear (8) with the output (30) of the coupled intermediate shaft (10) is provided between the first and the second intermediate gears (7, 8), the first intermediate gear (7) and the second intermediate gear (8) have a different transmission ratio, whereas the transmission ratio of the second intermediate gear (8) is **characterised in that** said transmission ratio is modified by the amount of slip of the hydrodynamic component at the desired lockup with respect to the first intermediate gear (7);
a braking device (22) is associated with the hydrodynamic component (2), in particular the secondary wheel (5), which is used for blocking in position the secondary wheel (5).

2. A lockup clutch arrangement (1) according to claim 1, **characterised in that** the switchable clutch device contains a clutch (18) which can be used in common by both power branches (32, 33), i.e. the connections between the various inputs (26, 27) and the output of the lockup clutch arrangement or comprises at least one engageable clutch, associated separately with each power branch (32, 33).

3. A lockup clutch arrangement (1) according to claim 1 or 2, **characterised in that** the engageable clutch (18) is designed as a positive synchronous engageable clutch.

4. A lockup clutch arrangement (1) according to claim 3, **characterised in that** the engageable clutch (18) is designed as a claw clutch.

5. A lockup clutch arrangement (1) according to claim 4, **characterised in that** the first and the second intermediate gears (7, 8) are arranged coaxially and parallel to one another.

6. A lockup clutch arrangement according to claim 1 or 5, **characterised in that** the output of the lockup clutch arrangement (1) consists of the intermediate shaft (10) coupled with the outputs of the first and second intermediate gears.

7. A lockup clutch arrangement (1) according to claim 1 or 5, **characterised in that** the outputs of the first and second intermediate gears (7, 8) can be coupled via at least one additional third intermediate gear (9) with the output of the bridging circuit (1).

8. A lockup clutch arrangement (1) according to claim 7, **characterised in that** another second engageable clutch (13) is provided, which is associated with the third intermediate gear (9) and connects the third intermediate gear (9) selectively with the intermediate shaft (10).

9. A lockup clutch arrangement (1) according to one of the claims 1 or 5 to 8, **characterised in that** the various intermediate gears (7, 8, 9) are each designed as spur wheel gears (11,12,13).

10. A lockup clutch arrangement (1) according to one of the claims 7 to 9, **characterised in that** a third engageable clutch (24) is provided, which connects directly the input of the bridging circuit (1), which is coupled with the primary wheel, to the output of the bridging circuit, whereas said clutch is arranged for instance between the second (8) and the third intermediate gears (9) and connects the second (8) to the third intermediate gear (9) at least selectively or releases said connection.

11. A lockup clutch arrangement (1) according to one of the claims 1 to 12, **characterised in that** the engageable clutches (23, 24) are designed as positive synchronous engageable clutches.

12. A lockup clutch arrangement (1) according to claim 11, **characterised in that** the positive clutch is designed as a claw clutch.

13. A lockup clutch arrangement (1) according to one of the claims 1 to 12, **characterised in that** all the engageable clutches (18, 23, 24) are designed as frictional clutches.

14. A lockup clutch arrangement (1) according to one of the claims 1 to 13, **characterised in that** a free-wheel mechanism (F) is arranged between the secondary wheel (5) and the input (26) of the lockup clutch arrangement (1).

15. Assembly (25) fitted with a hydrodynamic component (2) having a lockup clutch arrangement (1) according to one of claims 1 to 14.

## Revendications

1. Embrayage de verrouillage (1) pour composant hydrodynamique (2) sous forme d'embrayage hydrodynamique (3), n'ayant pas de roue de guidage, comportant au moins une roue primaire (4) et une roue secondaire (5), définissant un espace de travail (6) susceptible d'être rempli de fluide de travail;
présentant deux entrées (26, 27) - une première entrée (26) connectée à la roue secondaire (5) et une deuxième entrée (27) connectée à la roue primaire (4) - alors que les entrées (26, 27) peuvent être connectées de manière sélective par un dispositif d'embrayage commutable, comportant au moins un embrayage embrayable (18) présentant une sortie (28) de l'embrayage de verrouillage (1) en constituant une première ou seconde branche de puissance (32,33);
l'accouplement entre l'entrée (27) de l'embrayage de verrouillage (1) couplé à la roue primaire (4) et la sortie (28) de l'embrayage de verrouillage (1) permettant de réaliser la seconde branche de puissance (33) ne possède aucune liaison mécanique bloquée en rotation entre la roue primaire (4) et la roue secondaire (5);
des dispositifs de conversion vitesse-couple sont prévus dans l'accouplement entre les entrées (26, 27) de l'embrayage de verrouillage (1) et la sortie (30) de l'embrayage de verrouillage (1) dans les diverses branches de puissance (31,33);
**caractérisé par** les propriétés suivantes:
les dispositifs de conversion vitesse-couple dans les diverses branches de puissance (32,33) comprennent chacun un pignon intermédiaire - un premier pignon intermédiaire (7), connecté à la roue secondaire (5) avec blocage en rotation et un deuxième pignon intermédiaire (8), connecté à la roue primaire (4) avec blocage en rotation;
l'embrayage embrayable (18) permettant l'accouplement sélectif du premier pignon intermédiaire (7) ou du deuxième pignon intermédiaire (8) avec la sortie (30) de l'arbre intermédiaire accouplé (10) est prévu entre le premier et le deuxième pignons intermédiaires (7, 8), le premier pignon intermédiaire (7) et le deuxième pignon intermédiaire (8) présentent un rapport de transmission différent, alors que le rapport de transmission du deuxième pignon intermédiaire (8) est **caractérisé en ce que** ledit rapport de transmission est modifié par le degré de patinage du composant hydrodynamique au niveau de la dérivation désirée par rapport au premier pignon intermédiaire (7);
un dispositif de freinage (22) est associé au composant hydrodynamique (2), en particulier la roue secondaire (5), que l'on utilise pour assurer le blocage en position de la roue secondaire (5).

2. Embrayage de verrouillage (1) selon la revendication 1, **caractérisé en ce que** le dispositif d'embrayage commutable contient un embrayage (18) que peuvent utiliser en commun les deux branches de puissance (32, 33), à savoir les liaisons entre les diverses entrées (26, 27) et la sortie de l'embrayage de verrouillage ou comprend au moins un embrayage embrayable, associé séparément à chaque branche de puissance (32, 33).

3. Embrayage de verrouillage (1) selon la revendication 1 ou 2, **caractérisé en ce que** l'embrayage embrayable (18) est conçu comme embrayage embrayable synchrone positif.

4. Embrayage de verrouillage (1) selon la revendication 3, **caractérisé en ce que** l'embrayage embrayable (18) est conçu comme embrayage à griffes.

5. Embrayage de verrouillage (1) selon la revendication 4, **caractérisé en ce que** le premier et le deuxième pignons intermédiaires (7, 8) sont disposés coaxialement et parallèlement l'un à l'autre.

6. Embrayage de verrouillage (1) selon la revendication 1 ou 5, **caractérisé en ce que** la sortie de l'embrayage de verrouillage (1) se compose de l'arbre intermédiaire (10) couplé aux sorties du premier et du deuxième pignons intermédiaires.

7. Embrayage de verrouillage (1) selon la revendication 1 ou 5, **caractérisé en ce que** les sorties du premier et du deuxième pignons intermédiaires (7, 8) peuvent être accouplées par l'intermédiaire d'au moins un troisième pignon intermédiaire supplémentaire (9) avec la sortie de l'embrayage de verrouillage (1).

8. Embrayage de verrouillage (1) selon la revendication 7, **caractérisé en ce qu'**un autre deuxième embrayage embrayable (13) est prévu, qui est associé au troisième pignon intermédiaire (9) et connecte le troisième pignon inter- médiaire (9) de manière sélective à l'arbre intermédiaire (10).

9. Embrayage de verrouillage (1) selon l'une des revendications 1 ou 5 à 8, **caractérisée en ce que** les divers pignons intermédiaires (7, 8, 9) sont conçus chacun comme pignons droits cylindriques (11,12,13).

10. Embrayage de verrouillage (1) selon l'une des revendications 7 à 10, **caractérisé en ce qu'**un troisième embrayage embrayable (24) est prévu, lequel relie directement l'entrée de l'embrayage de verrouillage (1), qui est couplé à la roue primaire, à la sortie de l'embrayage de verrouillage, alors que ledit embrayage est disposé par exemple entre le deuxième (8) et le troisième pignons intermédiaires (9) et relie le deuxième (8) au troisième pignon intermédiaire (9) au moins de manière sélective ou bien libère ladite liaison.

11. Embrayage de verrouillage (1) selon l'une des revendications 1 à 12, **caractérisé en ce que** les embrayages embrayables (23, 24) sont conçus comme embrayages embrayables synchrones positifs.

12. Embrayage de verrouillage (1) selon la revendication 11, **caractérisé en ce que** l'embrayage embrayable est conçu comme embrayage à griffes.

13. Embrayage de verrouillage (1) selon l'une des revendications 1 à 12, **caractérisé en ce que** tous les embrayages embrayables (18, 23, 24) sont conçus comme embrayages à friction.

14. Embrayage de verrouillage (1) selon l'une des revendications 1 à 13, **caractérisé en ce qu'**un mécanisme à roue libre (F) est disposé entre la roue secondaire (5) et l'entrée (26) de l'embrayage de verrouillage (1).

15. Ensemble (25) équipé d'un composant hydrodynamique (2) possédant un embrayage de verrouillage (1) selon l'une des revendications 1 à 14.
